# EUROPEAN PATENT SPECIFICATION

(11) **EP 1 029 665 B1**
(45) Date of publication and mention of the grant of the patent: **04.06.2003**
(21) Application number: 00103121.0
(22) Date of filing: 16.02.2000
(51) Int. Cl.: B32B 31/12, B32B 3/12, B05C 1/00

(54) **Method and machine for making sandwich panels**
Verfahren und Maschine zum Herstellen von Sandwichplatten
Procédé et machine pour fabriquer des panneaux sandwich

(30) Priority: 16.02.1999 IT PS990004
(43) Date of publication of application: 23.08.2000
(73) Proprietor: Canti & Figli S.R.L., 61100 Pesaro (IT)
(72) Inventor: Canti, Max, Gradara (Pesaro) (IT)
(74) Representative: Negrini, Elena

(56) References cited:
- EP-A- 0 418 487
- EP-A- 0 512 646
- WO-A-92/10362
- WO-A-97/29905
- DE-A- 2 855 870
- GB-A- 1 434 941
- US-A- 4 179 325

## Description

The present invention relates to a method and machine for producing hollow core sandwich panels for doors or furniture or other uses.

The hollow core sandwich panels consist of an inner frame made of cheap wood for manufactures or made of hardboard filled with honeycomb made of impregnated paperboard and covered with two opposite sheets made of plywood or masonite or hardboard or M.D.F. or laminated wood, or other materials. The parts can be glued together with common adhesive such as vinyl adhesive fit for cold application, without ensuring the best seal, or urea formaldehyde ensuring a long life and humidity resistance.

In the past, the sandwich panels were largely diffused especially in the realization of doors and furniture, while now, because of the high production costs and the low productivity, they are used almost exclusively for inner doors of flats. In the furniture field, the sandwich panels have been replaced by hardboard veneered panels, which are heavier and have inferior quality.

Once the sandwich panels were manually assembled on a preparation table and then introduced into presses with several manually loaded planes, where they had to lie for a long time. These operations required a lot of time and a lot of operators for assembling, introducing and extracting the panels from several presses used to obtain a good productivity.

Other multiple section presses were made, in which, cyclically, only one section is opened for the panel loading and unloading, while the other sections remain under pressure. This kind of presses, together with the automation of the loading and unloading operations, allowed to increase the productivity, which still remain limited due to the manually sandwich composition and due to the long waits required by the traditional adhesives.

With the traditional methods the fast drying adhesives, such as P.U. hot-melt, cannot be used because the sandwiches must be prepared separately. Also polyurethane adhesive fit for a cold use would crystallize before the ending of the preparation phase.

Radial presses were also made which allow the cyclic loading of a rotating press element with two or more sections, while the other elements remain under pressure. This kind of presses did not have a wide diffusion due to the construction complexity, the dimensions and the high costs.

The cycle realization with multi-section presses requires the stocking of the panel to be cooled onto wide piles, so requiring a lot of time to cool, especially during summer. Besides, the panels must be prepared with holes or slits for the evacuation of the vapours made during the preheating.

These vapours cause the noxious gas continuous exhalation, contained in the sandwich panels of the doors or the furniture, inside the living space. In spite of these precautions, the preheated vapours produce deformations into the frames and surfaces with protrusions and depressions that must be eliminated with a subsequently calibration operation involving the material removal from the surfaces of about 5/10 mm per side. Suitable thickness coating panels must be used for allowing the calibration.

The calibration machine are expensive and require wide spaces due to their aspiration devices and voluminous silos for the dust suction. The abrasive tapes are expensive too, and produce hardboard chips, voids and strips too in correspondence of the connections passage, causing an inferior quality during the following veneering with thin covering sheets that cannot cover the imperfections.

WO-A-9 210 362 describes a method for reproducing honeycomb sandwich panels comprising spreading a bonding material on the inside surface of the side panels.

Document DE 28 55 870 discloses a machine for producing panels comprising conveying means suitable for feeding and converging side panels onto a moving honeycomb frame and sensor means for aligning the panels and the frame to be jointed. The main drawback consist in that said machine does not provide glue distribution and the exact positioning of the side panels on the honeycomb.

The objects of the present invention are to increase remarkably the productivity during the realization of the sandwich panels, to make them suddenly usable, to increase their quality, just to avoid the calibration operation, and to reduce the quantity of the used material.

These objects are achieved by the method according to claim 1 and the machine according to claim 5.

Further objects are to reduce the number and the dimensions of the equipment required and to avoid that the doors and the furniture produce continuing and noxious exhalation of formaldehyde or other noxious gases into the living spaces.

With this method and machine it is possible to form the sandwich, to glue and press the parts continuously, using P.U. hot-melt fast drying adhesive heating only the inside surfaces of the side panels.

It is also possible to use fast cold drying adhesives.

In that way the overheated vapours are not produced, which would warp the panels and so the following calibration is not required and the panel can be realised with thinner sheet.

The two thin side panels, coming from the suitable feeders, are moved and conveyed, with synchronism and suitable angulation, onto the two opposite frame surfaces including the honeycomb and at the same time they are heated on the surface of the side to be glued and spread with a fast drying adhesive by means of spreading heads, located near to the continuous roller pressing section, that exerts the required pressure onto the superimposed parts to be connected.

The heating of only the side panel inside surfaces, permits a fast cooling of the panels as a whole during the passage under the press roller and so the instantaneous adhesive crystallization.

In such a way the long times for pressing and cooling are eliminated and it is realized a continuos cycle, extremely fast, compatible with that required by the calenders used for the following veneering.

The present invention is described into details referring to the enclosed drawing tables, showing a possible embodiment as a sample, in which:
- figure 1 shows a schematic view of the working sequence and the means used for its realization;
- figure 2 shows an enlarged view of the main elements of the machine;
- figure 3 shows a sectional view of a special distribution head for the fast drying adhesive.

In said figures, numerals 1 and 2 refer to the side panels that, drawn from the related piles, are moved in an inclined way as in figure, by means of the feeder conveyors 3 and 4.

Numeral 5 indicates the frames with honeycomb, that are drawn from the related pile and advanced by means of a central feeder conveyor 6.

Sensors 7, 8 and 9 stop for a moment the three elements to be joined, just to let them assume, before the coupling, the positions exactly corresponding each over the other.

The two panels and the frame are advanced by means of the drive rolls 10, 11 and 12. In that phase, the side inclined panels 1, 2 converge onto the honeycomb frame 5, laying in the middle.

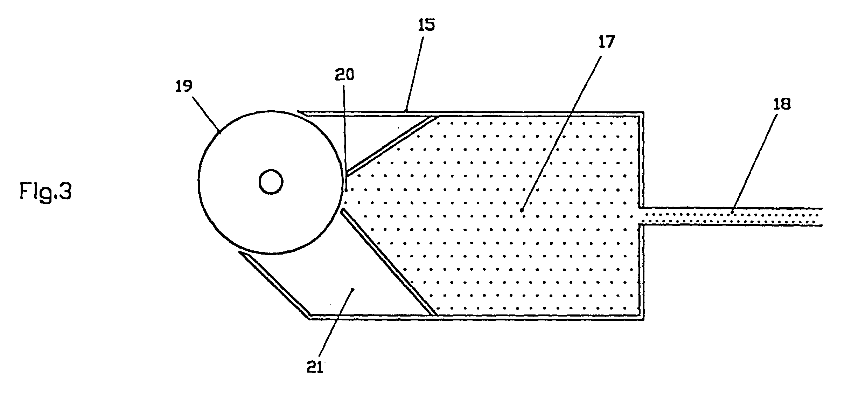

During the movement, the inside surfaces of the panels 1 and 2 are heated by means of thermo-plates 13 and 14 or similar just to prepare them to receive the hot melt fast drying adhesive, which is spread by means of the special heads 15 and 16, a section of which is shown in figure 3.

This head comprises a chamber 17, where the PU hot-melt adhesive, or a cold application adhesive, is let in with the tube 18, fed by means of a melter and by means of a gear pump. A roller 19 receives the adhesive from the opening 20 and spreads it on the heated surface of the moving panel.

A chamber 21, containing azote or other inert gas, prevents the adhesive to dry too fast.

The adhesive spreading heads 15, 16 can consist of side by side sections, separately activated, in order to change the width of the adhesive layer as needed.

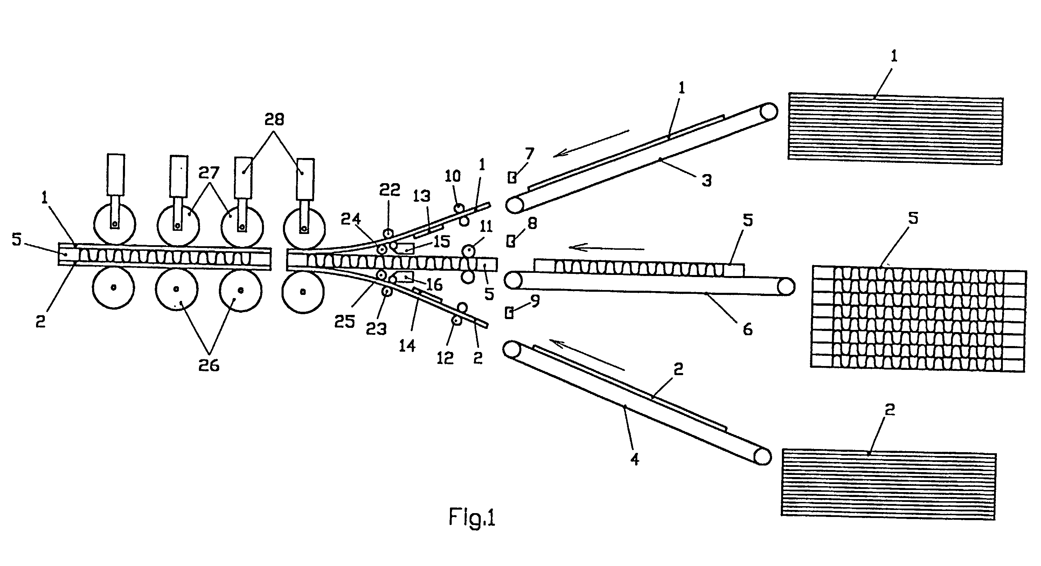

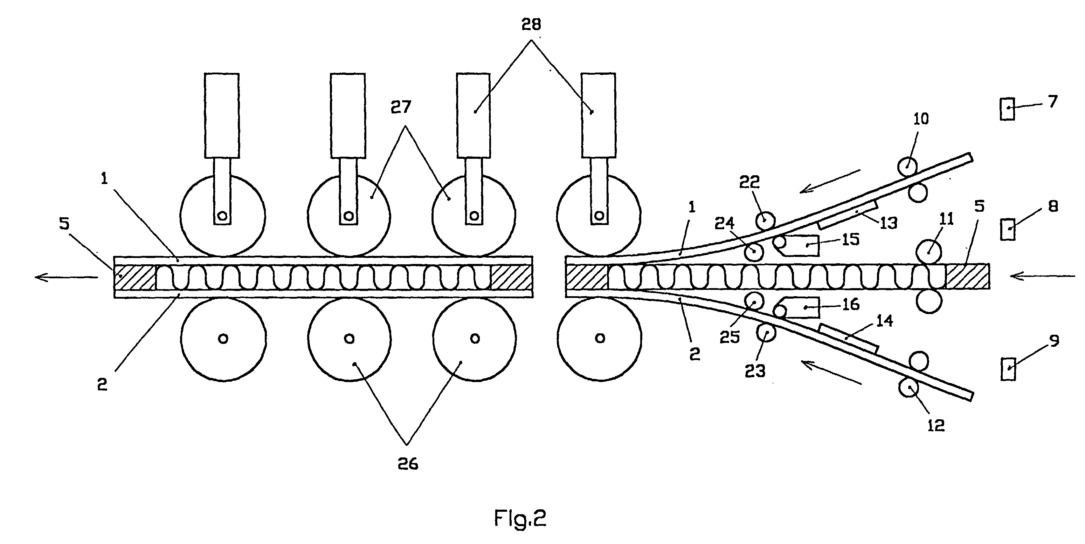

Numerals 22 and 23, figure 1 and 2, indicate the opposing roller and numerals 24 and 25 indicate the disk guiding rolls that guide the superimposed panels onto the frame so as to convey the panel tangentially to the continuous pressing section.

The continuous pressing section is constituted by a series of rollers 26 with fixed axis and a series of roller with mobile axis exerting adjustable pressures on the sandwich by means of the cylinders 28.

The proximity of the adhesive distribution heads to the pressing roller section, where the panels to be glued are continuously fed, allows the use of a fast drying adhesive that fastly crystallize due to the cooling of the rollers, since only the inside surfaces, and not the whole body, have been heated.

The machine can be oriented with the roller axis 26, 27 and the surfaces of the panels 1, 2 and 5 horizontally or vertically: in that case the figures would represent a plan view.

The so manufactured panels are ready to be veneered and, in a sufficient number, to fed continuously a calender, while with the traditional methods it would be necessary at least five plants.
According to what is written and described, it is clear and evident that the invention reaches the specified objects.

## Claims

1. Method for producing sandwich panels, in which side panels (1, 2) are fed from related piles by means of feeders (3,4,6), moved and converged onto the opposite surfaces of honeycomb frames (5) fed from a related pile, comprising the steps of : stopping the three elements (1, 2, 5) by means of sensor means (7, 8, 9) for exact positioning before the coupling; then advancing and converging the two side panels (1, 2) and the frame (5) by means of driving rolls (10,11,12); spreading a fast drying adhesive on the inside surfaces of the side panels (1, 2) by means of spreading heads (15, 16), near to a continuous roller pressing station, during said advancing and converging movement, exerting the required pressure on the superimposed panels (1, 2) and frame (5) to be joined so obtaining the instantaneous adhesive crystallization.

2. Method according to claim 1, in which before spreading the adhesive, the panels (1, 2) are heated onto their inside surface to be glued with a hot-melt adhesive and the subsequent exerted pressure of the continuous roller pressing station contributes to cool the assembly.

3. Method according to claim 1, in which a fast cold drying adhesive is spread since the adhesive distribution heads (15, 16) are close to the continuous roller pressing station.

4. Method according to any of the preceding claims, which includes the synchronous feeding of the panels (1, 2).

5. Machine for producing sandwich panels, comprising :
- feeders (3,4,6) and drive rolls (10, 11, 12), fit for feeding and converging, from related piles, side panels (1, 2) and honeycomb frames (5);
- sensor means (7, 8, 9) fit for stopping at the exact position the panels (1, 2) and the frames (5) to be joined;
- spreading heads (15, 16) of an adhesive orientated on the inside surfaces of the side panels (1, 2);
- a continuous roller pressing station displaced near the adhesive spreading heads (15, 16) provided for exerting the required pressure on the superimposed panels (1, 2) and frame (5) to be joined so obtaining the instantaneous adhesive crystallization.

6. Machine according to claim 5, which further includes heating means (13, 14) fit for heating superficially the inside surfaces of the panel (1, 2) when hotmelt adhesive is used.

7. Machine according to claim 5, in which the adhesive spreading heads (15, 16) spread the adhesive by means of rollers (19), partially inserted into chamber (21) filled with inert gas, and lapped by the adhesive, let in another chamber (17) by means of a pump.

8. Machine according to claim 5, in which the adhesive spreading heads (15, 16) have side by side sections, separately activated so as to change the width of the adhesive layer as needed.

9. Machine according to any one of the preceding claims 5, or 6 or 7 or 8, in which the axis of the roller pressing station (26, 27) and the panel (1, 2) and frame (5) surfaces are disposed horizontally or vertically.

## Patentansprüche

1. Verfahren zur Herstellung von Sandwich-Platten, bei dem Seitenplatten (1, 2) mit Hilfe von Zuführvorrichtungen (3, 4, 6) von entsprechenden Stapeln zugeführt werden und auf die einander gegenüberliegenden Seiten von von einem zugehörigen Stapel zugeführten Wabenrahmen (5) bewegt und dort zusammengeführt werden, mit den folgenden Schritten: dem Anhalten der drei Elemente (1, 2, 5) mit Hilfe von Sensormitteln (7, 8, 9) zum genauen Positionieren vor dem Verbinden; dann dem Vorwärtsbewegen und dem Zusammenführen der zwei Seitenplatten (1, 2) und des Rahmens (5) mit Hilfe von Antriebswalzen (10, 11, 12), dem Auftragen eines schnell trocknenden Klebstoffs auf die Innenseiten der Seitenplatten (1, 2) mit Hilfe von Auftragsköpfen (15, 16) nahe an einer kontinuierlichen Walzendruckstation während der Vorwärts- und Zusammenführbewegung, und dem Ausüben des erforderlichen Drucks auf die miteinander zu verbindenden, übereinander gelegten Platten (1, 2) und den Rahmen (5), um damit die sofortige Klebstoffkristallisierung zu erhalten.

2. Verfahren nach Anspruch 1, bei dem die Platten (1, 2) vor dem Auftragen des Klebstoffs auf ihrer Innenseite erwärmt werden, um mit einem Schmelzklebstoff verklebt zu werden, und der anschließend ausgeübte Druck der kontinuierlichen Walzendruckstation zum Abkühlen der Anordnung beiträgt.

3. Verfahren nach Anspruch 1, bei dem ein schnell kalttrocknender Klebstoff aufgetragen wird, da sich die Klebstoffverteilungsköpfe (15, 16) nahe an der kontinuierlichen Walzendruckstation befinden.

4. Verfahren nach einem der vorhergehenden Ansprüche, das das synchrone Zuführen der Platten (1, 2) umfaßt.

5. Maschine zur Herstellung von Sandwich-Platten, mit:
- Zuführvorrichtungen (3, 4, 6) und Antriebswalzen (10, 11, 12), die sich zum Zuführen und zum Zusammenführen von Seitenplatten (1, 2) und von Wabenrahmen (5) von entsprechenden Stapeln eignen;
- Sensormitteln (7, 8, 9), die sich zum Anhalten der miteinander zu verbindenden Platten (1, 2) und des Rahmens (5) an der richtigen Stelle eignen;
- Auftragsköpfen (15, 16) für einen auf den Innenseiten der Seitenplatten (1, 2) ausgerichteten Klebstoff;
- einer nahe an den Klebstoffauftragsköpfen (15, 16) angeordneten kontinuierlichen Walzendruckstation, die zum Aufbringen des erforderlichen Drucks auf die miteinander zu verbindenden, übereinander gelegten Platten (1, 2) und den Rahmen (5) vorgesehen sind, um damit die sofortige Klebstoffkristallisierung zu erhalten.

6. Maschine nach Anspruch 5, die ferner Heizmittel (13, 14) umfaßt, die sich zum oberflächlichen Erwärmen der Innenseiten der Seitenplatten (1, 2) eignen, wenn ein Schmelzklebstoff verwendet wird.

7. Maschine nach Anspruch 5, bei der die Klebstoffauftragsköpfe (15, 16) den Klebstoff mit Hilfe von Walzen (19) auftragen, die zum Teil in eine mit Inertgas gefüllte Kammer (21) eingeführt sind und von dem Klebstoff überzogen werden, der mit Hilfe einer Pumpe in eine weitere Kammer (17) eingelassen wird.

8. Maschine nach Anspruch 5, bei der die Klebstoffauftragsköpfe (15, 16) aneinanderliegende Abschnitte aufweisen, die getrennt aktiviert werden, so daß sie die Breite der Klebstoffschicht nach Bedarf verändern.

9. Maschine nach einem der vorhergehenden Ansprüche 5 oder 6 oder 7 oder 8, bei der die Achse der Walzendruckstation (26, 27) und der Oberflächen der Platten (1, 2) und des Rahmens (5) horizontal oder vertikal angeordnet sind.

## Revendications

1. Procédé pour fabriquer des panneaux sandwich, selon lequel des panneaux latéraux (1, 2) sont amenés à partir de piles associées au moyen de dispositifs d'amenée (3, 4, 6), sont déplacés et sont amenés à converger sur des surfaces opposées de cadres en nid d'abeilles (5) amenés à partir d'une pile associée, comprenant les étapes consistant à arrêter les trois éléments (1, 2, 5) à l'aide de moyens formant capteurs (7, 8, 9) pour un positionnement précis avant le couplage; faire ensuite avancer et converger les deux panneaux latéraux (1, 2) et le cadre (5) à l'aide de rouleaux d'entraînement (10, 11, 12); étaler un adhésif à séchage rapide sur les surfaces intérieures des panneaux latéraux (1, 2) à l'aide de têtes d'étalement (15, 16), à proximité d'un poste de pressage continu à rouleaux, pendant ledit mouvement d'avance et de convergence, appliquer la pression requise aux panneaux (1, 2) et au cadre (5), superposés, qui doivent être réunis pour obtenir la cristallisation instantanée de l'adhésif.

2. Procédé selon la revendication 1, selon lequel avant l'étalement de l'adhésif, on chauffe les panneaux (1, 2) sur leur surface intérieure devant être collée avec un adhésif fusible à chaud, et la pression ultérieure appliquée du poste de pressage continu à rouleaux contribue à refroidir l'assemblage.

3. Procédé selon la revendication 1, selon lequel on étale un adhésif, qui sèche à froid rapidement, étant donné que les têtes de distribution d'adhésif (15, 16) sont proches du poste de pressage continu à rouleaux.

4. Procédé selon l'une quelconque des revendications précédentes, qui inclut l'amenée synchrone des panneaux (1,2).

5. Machine pour fabriquer des panneaux sandwich, comprenant:
- des dispositifs d'amenée (3, 4, 6) et des rouleaux d'entraînement (10, 11, 12) montés de manière à faire avancer et amener à converger, à partir de piles associées, des panneaux latéraux (1, 2) et des cadres en nid d'abeilles (5);
- des moyens formant capteurs (7, 8, 9) montés pour arrêter dans la position précise les panneaux (1, 2) et les cadres (5) devant être réunis;
- des têtes d'étalement (15, 16) pour étaler un adhésif tournées vers les surfaces inférieures des panneaux latéraux (1, 2);
- un poste de pressage continu à rouleaux déplacé à proximité des têtes d'étalement d'adhésif (15, 16) et prévu pour appliquer la pression requise aux panneaux (1, 2) et au cadre (5), superposés, qui doivent être réunis en obtenant ainsi une cristallisation instantanée de l'adhésif.

6. Machine selon la revendication 5, qui comporte en outre des moyens de chauffage (13, 14) montés pour chauffer superficiellement les surfaces intérieures du panneau (1, 2) lorsqu'on utilise un adhésif fusible à chaud.

7. Machine selon la revendication 5, dans laquelle les têtes (15, 16) d'étalement de l'adhésif étalent l'adhésif à l'aide de rouleaux (19), qui sont insérés en partie dans la chambre (21) remplie par un gaz inerte, et sont recouverts avec l'adhésif, placé dans une autre chambre (17), au moyen d'une pompe.

8. Machine selon la revendication 5, dans laquelle les têtes (15, 16) d'étalement de l'adhésif comportent des sections disposées côte-à-côte, activées séparément de manière à modifier la largeur de la couche d'adhésif comme cela est nécessaire.

9. Machine selon l'une quelconque des revendications 5 ou 6 ou 7 ou 8, dans laquelle l'axe du poste de pressage à rouleaux (26, 27) et les surfaces des panneaux (1, 2) et des cadres (5) sont disposées horizontalement ou verticalement.
